# EUROPEAN PATENT APPLICATION

(11) **EP 2 290 607 A2**
(43) Date of publication of application: **02.03.2011**
(21) Application number: 10251360.3
(22) Date of filing: 30.07.2010
(51) Int. Cl.: G06Q 30/00

(54) **Eyeglass frames**

(30) Priority: 30.07.2009 GB 0913311
(71) Applicant: Nova Resources s.a.r.l., 2636 Luxembourg (LU)
(72) Inventor: Eriksson, Carl Erik, 182 61 Djursholm (SE)
(74) Representative: Mabey, Katherine Frances

(57) **Abstract**

A method and system for providing customized eyeglass frames in which a local user provides an indication of a design selected by the user for application to an eyeglass frame using a local user terminal (1,2). The indication is received at a central controller (7), which is at a different location from the local user terminal. The design is then applied, e.g. printed or transferred, to an eyeglass frame, such as on the arms, bridge, temples, etc, for supply to the local user (9,10).

## Description

The present invention relates to methods and systems for providing customized eyeglass frames.

The Applicant has recognised that conventional methods for providing eyeglass frames do not allow a user the freedom to customise the design of the frame to their own individual preferences. While a user may be able to choose the general style and colour of frame, conventional systems do not allow a user to tailor frames to their own particular taste.

The present invention, at least in preferred embodiments, provides an interactive method and system enabling a user to customize the design of their eyeglasses.

In accordance with a first aspect of the invention there is provided a method for providing customized eyeglass frames, comprising:
a local user providing an indication of a design selected by the user for application to an eyeglass frame; and
receiving, at a central controller, the indication provided by the user;
the method further comprising:
   applying said design to an eyeglass frame for supply to the user.

The present invention extends to a system for carrying out the steps of the method in accordance with any of its aspects or embodiments.

Thus, in accordance with a further aspect of the invention there is provided a system for providing customized eyeglass frames, comprising:
a central controller for receiving an indication from a local user of a design selected by the user to be applied to an eyeglass frame; and
means for applying said design to an eyeglass frame for supply to the user.

Thus, in accordance with the invention, a method and system is provided which enables an individual user to specify a design which they wish to have applied to an eyeglass frame, and then for the selected design to be applied to an eyeglass frame for supply to the user. This provides the user with the freedom to customize an eyeglass frame to their own individual preference.

The method of the present invention is preferably implemented over a distributed system. Thus, the user provides the indication of the selected design at a first (local user) location, and the indication is received by a central controller at a second, different (central) location. The user may be located at a location in a different country to the central controller.

The system and method of the present invention preferably provide an automated system for applying user specified designs to eyeglass frames. It will be appreciated that the method and system of the present invention are computer implemented. Preferably the method and system are internet based. Preferably the central controller is a server.

The present invention extends to a central controller arranged to carry out any of the steps of the method of the present invention in accordance with any of its aspects or embodiments, and a method of operating a central controller when implementing the method of the present invention in any of its aspects or embodiments.

Thus, in accordance with a further aspect of the invention there is provided a central controller, comprising:
means for receiving from a local user an indication of a design selected by the user for application to an eyeglass frame; and
means for providing information relating to said selected design to be used in controlling a process of applying designs to eyeglasses such that said selected design is applied to an eyeglass frame for supply to the user.

In accordance with a further aspect of the invention there is provided a method of operating a central controller of a system for providing customized eyeglasses, comprising:
receiving at the central controller from a local user location an indication of a design selected by the user for application to an eyeglass frame; and
the central controller providing information relating to said indication to be used in controlling a process for applying designs to eyeglass frames such that said selected design is applied to an eyeglass frame for supply to the user.

The present invention in accordance with these further aspects of the invention may comprise any or all of the features described in relation to the other aspects and embodiments of the invention to the extent that they are not mutually inconsistent.

The user is preferably an end user, i.e. someone who intends to use/wear the eyeglass frames. The user may be referred to as a customer.

The user may provide the indication of the design to be applied to the eyeglass frame in any suitable manner. Preferably the user provides the indication via a local user terminal. The local user terminal may be of any type, and may be a mobile or desktop computer, mobile telecommunications device, etc. The method may further comprise providing a user interface through which the user provides the indication, and the system may comprise such an interface.

In accordance with the invention, the indication is provided to the central controller over a communication link. For example, the user may provide the indication to the central controller over the internet, e.g. via a website.

In some embodiments of the invention, the method further comprises the step of presenting the local user with information relating to a plurality of designs from which the design to be applied to an eyeglass may be selected, and the system comprises means for carrying out this step. The information relating to the designs may be of any type enabling the user to make a selection from the plurality of designs. Preferably the information comprises images of each of the plurality of designs, and the method comprises displaying images of each of the plurality of designs to the user. The user is preferably presented with the designs via a local user terminal. In preferred embodiments the designs are presented to the user via a website.

In these embodiments the method further comprises the step of storing information relating to a plurality of designs which may be applied to eyeglass frames, and the system comprises means for so doing. Some or all of the designs may then be presented to the user. For example, a user may choose to be presented with only certain categories of design, or all available designs may be presented to the user. In preferred embodiments, the central controller stores such information.

Alternatively or additionally, rather than requiring the user to select a design among designs presented by the system to the user, the system may be configured to enable the user to provide information relating to a selected design to be applied to the eyeglass frame to the system. The system should then be configured to receive such information from a user. In embodiments, the user indicates a selected design by providing information relating to a design to the system. Preferably the information is an image, and preferably the user uploads the image to the system, e.g. central controller. The website may provide instructions guiding the user through the process of uploading an image.

Thus, in some embodiments, the user chooses an image of a design to be applied to an eyeglass frame from a plurality of images presented to the user by the system, e.g. on a website. In other embodiments, the user provides an image to the system, e.g. by uploading the image to the central controller. A system may be configured such that the user may only provide the indication of the image using one of these methods, or may offer the user the option of either method.

Regardless of the method by which the user provides an indication of the design to be applied to an eyeglass frame, preferably the method further comprises the step of the user indicating an eyeglass frame style to which the design is to be applied. Thus, the eyeglass frame is preferably a user selected eyeglass frame. This may be achieved in the same manner as described with respect to the user indicating the design to be applied to the frame. Preferably the method comprises presenting the user with information relating to a plurality of eyeglass frame styles to which the design may be applied. Preferably the user is presented with images of each of the frame styles. In contrast to providing an indication of the design, the facility enabling the user to provide the frame style information to the system, e.g. by uploading an image of the frame may not be offered. This may then enable the system to offer only those frame styles which are available and manufactured by the eyeglass manufacturer.

Any of the features discussed above in relation to the indication of the design to be applied may be used in conjunction with the selection of the frame style. In preferred embodiments, the user selects an image of a frame style from a plurality of images displayed on a website. The method may then comprise the step of displaying the plurality of images to the user, and the system comprise means for so doing. The system, e.g. the central controller, then stores information, e.g. images, relating to a plurality of frame styles for display to the user.

Preferably the method further comprises the user specifying the size and/or position of the design to be applied to the eyeglass frame relative to the eyeglass frame, and the method comprises receiving such an indication from the user.

In accordance with the invention, the design is a design to be applied to at least a portion of the eyeglass frame. While the design could be applied to the entire frame, preferably the design is applied to only a portion of the eyeglass frame. The design may be applied to any one or more distinct parts of the eyeglass frame as desired. For example, a design may be applied to the interior or exterior of one or both arms of the frame, the bridge of the frame, one or both temples of the frame, etc. In preferred embodiments, the user indicates the part or parts of the eyeglass frame to which the design is to be applied, and the system receives such an indication from the user. In embodiments the method may comprise the step of presenting the user with an image of a part or parts of the eyeglass frame to which a design may be applied, from which the user may select a part or parts to which the design is to be applied. This may be carried out in the same manner as described above in relation to presenting images of the eyeglass frame and/or design.

In preferred embodiments, the method further comprises providing the user with an indication of the appearance of the selected design as applied to the, preferably user selected, eyeglass frame, and the system comprises means for so doing. Preferably the indication is an image, and preferably a composite image comprising an image of the design superimposed on an image of the eyeglass frame. The system may therefore comprise means for superimposing an image of the selected design on an image of the (selected) eyeglass frame, and displaying the composite image to the user. The user may then decide whether they are happy with the appearance before confirming their order.

In preferred embodiments, the method comprises allowing the user to manipulate the composite image indicating the appearance of the design as applied to the eyeglass frame, and the system comprises means for allowing the user to carry out such a step. For example, the system may permit the user to enlarge, shrink, rotate, flip and/or move one or both images, preferably at least the image of the design. This may be particularly beneficial where the design has been indicated to the system by the user, e.g. by uploading an image, as the design may not be of a standard format sized to fit the frame. The system may comprise rules preventing the user from manipulating the image(s) in a manner which would not provide an acceptable result if the design were applied to a frame in accordance with the composite image, and/or may warn the user if an image is manipulated, e.g. enlarged in a manner which would not produce an acceptable result when applied to the frame.

It will be appreciated that the indication of the design applied to the eyeglass may indicate all, a portion, or portions of the eyeglass frame depending upon the part or parts of the eyeglass frame to which the design is to be applied. Preferably the indication comprises an image showing only a part of the eyeglass frame. The indication may comprise multiple images each showing different parts of an eyeglass frame to which the design is to be applied.

The user may be offered the option of confirming the choice of design (and frame) or declining it. If the user decides not to proceed, they may select another design and view its appearance applied to the frame, and/or manipulate the image further. The method may then comprise the step of the user confirming an order for the eyeglass having the design applied thereto, and the system may receive confirmation of the order. The method may comprise checking that the combination of the ordered design and eyeglass meets certain parameters to ensure that an acceptable result will be obtained when the design is applied to the eyeglass. This may be in terms of legibility of the image, processability and/or more aesthetic criteria. If this test is failed, the order may be rejected, or the user warned. Otherwise, the order may be stored and/or passed on to a manufacturing facility as described below.

In embodiments, the system determines information which may be used to control the process of applying the design to an eyeglass frame, i.e. such that the design is applied appropriately to the eyeglass frame. By appropriately it is meant such that the design is applied to the frame in a manner consistent with the user's specifications, and providing an appearance which is deemed to be of reasonable quality. The information includes information relating to the user's indication or indications. The information thus includes at least information relating to the design indicated by the user, and preferably also relating to a selected frame. Preferably the method comprises determining information relating to the eyeglass frame and design selected by the user, preferably including information relating to the position and/or size of the design relative to the frame, and the system comprises means for so doing. Preferably the method further comprises storing the determined information. In embodiments, the system creates an image file storing such information. In embodiments, the image file includes all of the necessary information needed to control the design application process.

The step of determining may comprise selecting the relevant information indicated by the user during the selection process to be provided to a control means for controlling application of the design to the eyeglass. The system may simply pass or push relevant information to the control means. However, in embodiments the step of determining alternatively or additionally comprises deriving information, e.g. instructions which may be used to control application of the design to an eyeglass, and the determined information comprises such derived information. For example, the system may translate the user's indications into a form usable by the design application means to result in the design being appropriately applied to a frame. This may involve operations such as formatting an image for compatibility with the design application means, optimizing e.g. colour intensity, resolution and contrast with the particular apparatus to be used, and/or sizing the design to fit the frame or part thereof to which it is to be applied.

It will be appreciated that it is necessary to register the design to the part or parts of the eyeglass frame to which it is to be applied. Preferably the method comprises the step of deriving information to enable the design to be registered to an expected position of the frame, or part thereof, in the design application apparatus. This may be achieved by reference to a point or points on a support which supports the frame during application of the design. Such information may be derived by the central controller as part of the derived information for controlling application of the design to the frame discussed above, or may be determined by a controller of the design application apparatus, e.g. using information provided thereto, for example, by a central controller.

The information may be determined and/or stored automatically at a suitable point or points in the process, e.g. once a user places an order. The information may be associated with a user identifier.

Any of the steps described above relating to the interaction of the user with the system to choose the design/eyeglass frame and place an order, as well as the determining of the information for controlling the design application process, may be carried out by the central controller. In embodiments, the interaction occurs between a local user terminal and the central controller, preferably via the internet i.e. a user interface in the form of a website.

It will be appreciated that more than one different design may be applied to an eyeglass frame, to the same or different parts thereof, and/or more than one eyeglass frame having different designs may be ordered by a user. Thus, references to the user indicating a design to be applied to an eyeglass frame should be understood to encompass the user indicating at least one design to be applied to at least one eyeglass frame, and the method and system will be arranged appropriately. The procedure for indicating each design may proceed as described in relation to the first design above. The user may indicate more than one design at the same time, or may do so sequentially. The user may be shown the appearance of the eyeglass frame having each design applied thereto and/or individual parts having respective ones of a plurality of designs. In the case that multiple designs are selected for a single frame, the user need only select one eyeglass frame to which the designs are to be applied.

The step of applying the selected design to an eyeglass frame may or may not be carried out at a location different to the central controller location (and the user location). Application of the selected design to an eyeglass frame may be carried out at an eyeglass frame manufacturing facility, e.g. as a final step of manufacture of the eyeglass frames in a manufacturing facility. Application of the design to an eyeglass frame in accordance with the invention need not be carried out at the same time or place as manufacture of the frames. For example, this step may be carried out at a printing facility subsequent to eyeglass frame manufacture. Alternatively, the design may be applied to the eyeglass frames during, or as a step of, the glazing operation, i.e. when the eyeglass frames are fitted with lenses. In embodiments, the central controller is located at an eyeglass frame manufacturing facility.

The method of the present invention comprises the step of providing information relating to said selected design to be used in controlling a process of applying designs to eyeglasses such that said selected design is applied to an eyeglass frame for supply to the user.

Preferably the method comprises providing information relating to the design to a controller for controlling a process of applying a design to an eyeglass frame, and the system comprises means for carrying out these steps. Preferably the central controller provides the information to the controller. The controller may be, for example, a processor controlling a design application apparatus such as a printer. The information may be provided to the controller over any suitable communications link. Similarly, the controller may provide the information to a means for applying the design over a communications link.

The information provided may be of any suitable type which may be used to control a process such that the design is applied to an eyeglass frame. The information may identify the design to be applied, and preferably the location and/or size of the design relative to the frame. Preferably information relating to the eyeglass frame to which the design is to be applied, e.g. identifying the frame style, is also provided. Preferably the information is information relating to the user's indications. Preferably the information is information determined by the system as described above for use in controlling application of the design to an eyeglass frame. The information may be of any of the types described. In particularly preferred embodiments the information thus comprises an image file.

Preferably the method comprises the step of using the information provided, e.g. by the central controller, relating to the design selected by the user to control a process of applying a design to an eyeglass frame such that the selected design is applied to the eyeglass frame, and the system comprises means for so doing.

The present invention extends to a method of applying a design to an eyeglass, the design being a design indicated to a central controller by a local user.

Thus, in accordance with a further aspect of the invention there is provided a method for applying a design to an eyeglass frame, comprising:
receiving from a central controller information relating to a design to be applied to an eyeglass frame, wherein the design is a selected design indicated by a local user to the central controller; and
using said information in a process of applying a design to an eyeglass frame such that the selected design is applied to an eyeglass frame.

In accordance with a further aspect of the invention, there is provided a system for applying designs to eyeglass frames, comprising:
means for receiving information relating to a design to be applied to an eyeglass frame from a central controller, wherein the design is a selected design indicated by a local user to the central controller; and
using the information to control means for applying a design to an eyeglass frame such that said selected design is applied to an eyeglass frame.

The present invention in accordance with these further aspects may comprise any or all of the features discussed in relation to the other aspects of the invention to the extent that they are not mutually inconsistent therewith.

The selected design may be applied to an eyeglass frame using any suitable means for applying the selected design to an eyeglass frame.

For example, in embodiments, the design may be printed onto to the eyeglass frame, and the means for applying designs to eyeglass frames is printing means. The printing means may be of any suitable type. The printing means may be arranged to print designs onto eyeglass frames using a contact or non contact process. In preferred embodiments, the printing means is ink jet printing means. Preferably the design is a colour design and the design application means is configured to provide colour images.

In other embodiments, the design may be applied to the eyeglass frames using a two-step procedure, such as by transfer printing. In such embodiments, the design is preferably printed onto a mould or other suitable means, and the printed design is then transferred onto the eyeglass frames, e.g. by using heat.

As discussed above, it is necessary to ensure that the design is applied to the part of the frame to which it is intended to be applied, i.e. to register the design. This may be carried out in any suitable manner, e.g. by directly or indirectly mapping images of the design and selected frame parts to one another. Preferably the frame is mounted to a support during application of the design thereto, and the design is registered to the eyeglass frame by reference to the support. For example, one or more reference points on the support may be used. The support may be used as a reference for a coordinate system, etc. The method may comprise the step of mounting the eyeglass frame in a support. Preferably information is provided for controlling the process relating to the way in which the design is to be registered relative to a support associated with the (selected) frame style. The information may then be used in the process of applying the design.

It is believed that these aspects of the invention are advantageous in their own right.

Thus, from a further aspect of the invention there is provided a method for providing customized eyeglass frames, comprising:
a user providing indications of a design selected by the user for application to an eyeglass frame, of an eyeglass style selected by the user to which the design is to be applied, and of a desired position of the design relative to the frame;
receiving the indications provided by the user; and
determining information which may be used to control a process for applying the design to the eyeglass frame to result in the selected design being applied to an eyeglass frame of the selected style in the desired position;
wherein the eyeglass frame is to be mounted to a support during application of the design thereto, and the step of determining said information comprises the step of identifying a support to be used in the design application process, and deriving registration information for the design relative to the support which may result in application of the design in the desired position to an eyeglass frame of the selected style when mounted to the support in use.

In accordance with another aspect of the invention there is provided a system for providing customized eyeglass frames, comprising:
means for receiving from a user indications of a design selected by the user for application to an eyeglass frame, of an eyeglass style selected by the user to which the design is to be applied, and of a desired position of the design relative to the frame; and
means for determining information which may be used to control a process for applying a design to an eyeglass frame to result in the selected design being applied to an eyeglass frame of the selected style in the desired position;
wherein the eyeglass frame is to be mounted to a support during application of the design thereto, and said means for determining said information comprises means for identifying a support to be used in the design application process, and means for deriving registration information for the design relative to the support which may result in application of the design in the desired position to an eyeglass frame of the selected style when mounted to the support in use.

In these embodiments, the user is preferably a local user, and the indications received by a central controller or server as in the previous embodiments.

In accordance with a further aspect of the invention there is provided a central controller, comprising:
means for receiving from a local user indications of a design selected by the user for application to an eyeglass frame, of an eyeglass style selected by the user to which the design is to be applied, and of a desired position of the design relative to the frame; and
means for determining information which may be used to control a process for applying a design to an eyeglass frame to result in the selected design being applied to an eyeglass frame of the selected style in the desired position;
wherein the eyeglass frame is to be mounted to a support during application of the design thereto, and said means for determining said information comprises means for identifying a support to be used in the design application process, and means for deriving registration information for the design relative to the support which may result in application of the design in the desired position to an eyeglass frame of the selected style when mounted to the support in use.

The invention further extends to a method of operating such a central controller.

Thus, in accordance with a further aspect of the invention there is provided a method for providing customized eyeglass frames, comprising:
receiving, at a central controller, indications from a local user of a design selected by the user for application to an eyeglass frame, of an eyeglass style selected by the user to which the design is to be applied, and of a desired position of the design relative to the frame; and
the central controller determining information which may be used to control a process for applying a design to an eyeglass frame to result in the selected design being applied to an eyeglass frame of the selected style in the desired position;
wherein the eyeglass frame is to be mounted to a support during application of the design thereto, and said means for determining said information comprises means for identifying a support to be used in the design application process, and means for deriving registration information for the design relative to the support which may result in application of the design in the desired position to an eyeglass frame of the selected style when mounted to the support in use.

The present invention in accordance with any of these further aspects of the invention may include any or all of the features described with respect to the other aspects of the invention to the extent that they are not inconsistent therewith, e.g. relating to the user indications, and use of the determined information to control the design application process, design application process, etc.

It will be appreciated that the information regarding the identification of the support may be provided in addition to, for example, the registration information. The information may then be used to select the support for use in the process, if this is not apparent or derivable by an operator or the system from the frame style indication.

In accordance with the invention in any of its aspects and embodiments, preferably the support is configured to be specifically adapted for supporting a given frame style. In embodiments, the support is adapted such that an eyeglass frame of the given style fits the support in a manner to retain the frame in a fixed position relative to the support during application of a design. In this manner, for a given support, the parts of a given style of frame with which the support is intended to be used will be in a predictable location relative to the design application apparatus. In embodiments the method further comprises locating the support in a predetermined initial position relative to the design application apparatus or a part thereof.

In preferred embodiments, the method comprises identifying a support to be used with the selected eyeglass frame style from among a plurality of different supports. By "different" it is meant that the supports are differently configured. For example, the system may store information for each of a plurality of eyeglass frame styles which may be selected by a user identifying a support to be used with the respective frame style. In embodiments, the system stores information identifying for each of a plurality of different frame styles which may be selected by a user an associated support adapted to be used therewith, wherein a different support is associated with each of the different frame styles. Each different style may be associated with a different support, or some styles may be associated with the same support. The supports may be identified by a support type identifier. In this manner, the registration information may be determined with reference to the known properties of the identified support, such that when the eyeglass is located in the specified support in use, the design will be applied to the intended location.

Thus, the method may further comprise providing a plurality of different supports, each adapted to support a given eyeglass frame style, and selecting a support from said plurality of supports adapted to support the frame style to which the design is to be applied. Preferably the frame style is a user indicated frame style as discussed above. The method may then comprise registering the design to the frame by registering the design to the support. Preferably the support is selected using the determined information identifying the support to be used. The selection may be manual or automated.

The support may be of any suitable type. In embodiments, the support retains the eyeglass frame in a fixed position relative to the support during application of the design. Any fixture, such as a jig, may be used. In some embodiments, the support is a mould. This may be appropriate if the design is applied immediately after manufacture.

During the process of applying the design to the eyeglass frame, the design application apparatus or part thereof, e.g. print head, and eyeglass frame may move relative to one another. This may be accomplished by movement of only one of the frame and the apparatus or part thereof, or both. Movement of the frame may be achieved by movement of a support to which the frame is mounted in preferred embodiments.

In some embodiments, the method may comprise applying a pre-treatment to the eyeglass frame prior to application of the design. The pre-treatment may be applied to at least a part of the eyeglass frame to which a design is to be applied, and preferably only to a portion of the frame. The treatment may comprise a surface coating to provide a base for subsequent application of the design. For example, the treatment may facilitate subsequent application or adherence of the design, promote visibility of the design, or to try to result in a coloured design appearing true to colour. In preferred embodiments the design is printed on to the frame, and the pre-treatment provides a surface layer suitable for receiving the printed design, e.g. ink. In some embodiments, the treatment is a coating which provides a base layer of uniform colour, preferably white, upon which a colour design may be printed. The coating may be a paint or ink layer. In embodiments the pre-treatment is a white paint or ink layer. The coating may be applied by the design application apparatus, e.g. a printer, or by other means.

The method may further comprise sealing the design to the frame. For example a post treatment, e.g. surface treatment, may be applied after application of the design. The treatment may provide a sealing layer after application of the design, and/or the design may be sealed using heat and/or pressure. Any suitable technique may be used to do this.

In accordance with the present invention, any references to a "design" herein refer to a surface decoration or ornamentation which is applied to the eyeglass frame. The design may be a graphic comprising a pattern, logo, figure, picture etc. The design may include or consist of text. Preferably the design is two dimensional. The design may be a coloured design. It will be appreciated that the design is a design superimposed on the frame and any pre-existing, e.g. background design, that has been applied to the frame. By way of example, a design might be the logo of a sports team the user supports, a name, signature, pattern, etc.

The method may further comprise the step of mounting lenses in the eyeglass frame. This may provide a pair of eyeglasses ready for use by a user. This may be carried out before or after printing of the eyeglass frame. Alternatively the frames could be supplied without lenses to, for example, a user.

The eyeglass frames may be of any type. They may be for use in providing any form of eyeglass, e.g. for correcting sight, protecting the eyes, fashion use, etc. Thus, if lenses are provided, they may be lenses for correcting sight, e.g. prescription lenses, non corrective lenses, tinted lenses, protective lenses, etc.

The method may further comprise the step of dispatching the eyeglass frame having the selected design applied thereto to the user.

It will be appreciated that the central controller may receive indications relating to designs to be applied to eyeglasses and other matters, e.g. frame selection, position of design, etc from each of a plurality of different users in different local user locations. The users may even be located in different countries. Thus, in embodiments, the user referred to herein may be a first local user, and the system may receive indications from each of one or a plurality of additional local users of designs selected by the respective users for application to eyeglasses. The local users may be located in respective different local user locations. The system may be readily used with any number of users when implemented as an internet based system. The information relating to the indications of each user may be stored in a for processing in a given order.

In these embodiments, the method may additionally comprise receiving a user identifier in respect of each user to be associated with the indication of the selected design.

In accordance with another aspect of the invention there is provided a method for providing customized eyeglass frames, comprising:
each of a plurality of different local users providing an indication of a design selected by the respective user for application to an eyeglass frame;
receiving, at a central controller, the indications provided by the users;
the method further comprising applying said indicated designs to eyeglass frames for supply to each of the users.

The invention extends to a system for implementing such a method and a central controller adapted to carry out some or all of the steps of the method.

For the avoidance of doubt, if not explicitly stated, the invention in any of its aspects may include any of the embodiments, steps or features described with respect to any of the other aspects of the invention to the extent that they are not mutually inconsistent.

It will be appreciated that, even if not explicitly stated, the present invention extends to a system for implementing any of the method steps referred to, and conversely, a method involving any of the steps carried out by the system described herein.

It will be appreciated that the present invention is particularly, although not exclusively, applicable to operations in which production of eyeglasses, including lenses and frames, occurs at a central location, e.g. in a factory by a single operator, e.g. business entity. This is in contrast to conventional systems in which production of frames, and insertion of lenses occurs in different locations, and/or by different operators, e.g. business entities.

References to a communications link herein refer to a link of any form, and the link may be a wireless or wired link. The link may be direct or indirect, and may be short or long range.

The methods in accordance with the present invention may be implemented at least partially using software, e.g. computer programs. It will thus be seen that when viewed from further aspects the present invention provides computer software specifically adapted to carry out the methods hereinabove described when installed on data processing means, and a computer program element comprising computer software code portions for performing the methods hereinabove described when the program element is run on data processing means. The invention also extends to a computer software carrier comprising such software which when used to operate a personal communications system or hands free device comprising data processing means causes in conjunction with said data processing means said system or device to carry out the steps of the method of the present invention. Such a computer software carrier could be a physical storage medium such as a ROM chip, CD ROM or disk, or could be a signal such as an electronic signal over wires, an optical signal or a radio signal such as to a satellite or the like.

It will further be appreciated that not all steps of the method of the invention need be carried out by computer software and thus from a further broad aspect the present invention provides computer software and such software installed on a computer software carrier for carrying out at least one of the steps of the methods set out hereinabove.

A preferred embodiment of the present invention will now be described by way of example only, and with reference to the accompanying drawing in which:

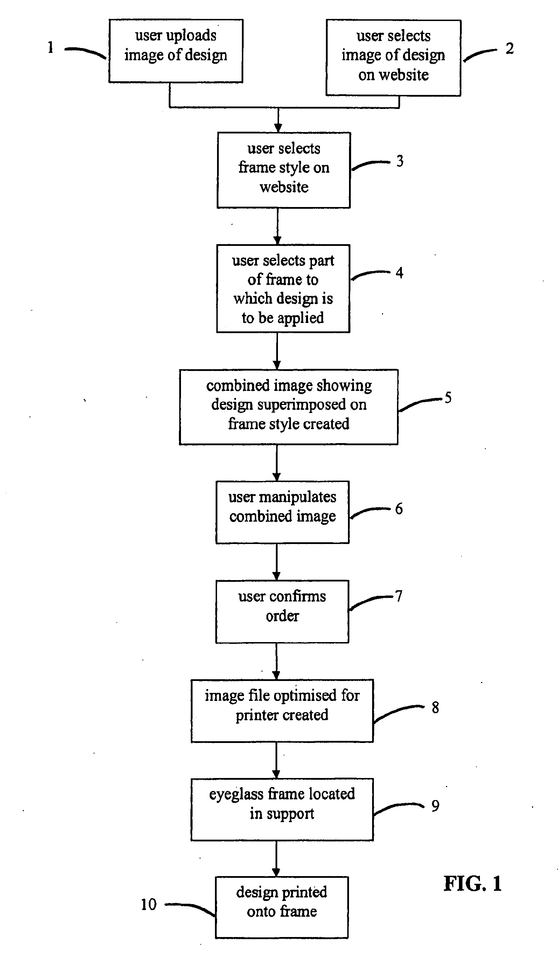

Figure 1 is a flow diagram illustrating the steps of a method in accordance with one embodiment of the invention.

The method is implemented via the internet. A local user interacts with a central server via a website using a user terminal to specify a design to be applied to an eyeglass frame, and to choose the eyeglass frame and the position/size of the design relative to the frame. The design may be a logo, signature, picture, etc.

First the user indicates the design to be applied to the eyeglass frame. This may be done in one of two ways. In the first alternative, the user uploads an image of a design they wish to have applied to the eyeglass frame to the central server for display on the website by following instructions on the website (1). In the second alternative, the user selects an image of a design for application to the eyeglass from a range of images of designs displayed on the website (2). These images are stored by the central server.

Next the user indicates their choice of eyeglass frame style by selecting among images of different styles displayed on the website (3). The images are also stored by the central server.

The user is then presented with images of different parts of the frame to which the design may be applied (4). The user indicates their selection via the website.

A composite image of the part or parts of the eyeglass selected with the selected design superimposed thereon is then displayed to the user. The user may view the image to decide whether they are happy with their selections (5).

The user may manipulate the composite image by, for example, enlarging, shrinking, rotating, flipping, etc the images of the design and/or frame to adjust the composite image, and the position and/or size of the design relative to the frame (6).

A warning may be displayed if, for example, the image of the design is enlarged to an extent that an unacceptable result would be obtained if this were to be applied to an eyeglass.

Once the user is happy with their selections they confirm the order (7).

All the above steps involve interaction of the user with the central server via the website.

The central server then creates an image file automatically which is formatted appropriately for a printer which is to be used to apply the design to a frame. For example, the colour intensity, resolution and contrast may be optimized for the printer. The image may be cropped or otherwise scaled to fit the part to which it is to be applied. The image file may contain instructions for registering the design relative to the selected eyeglass frame, or a support, e.g. jig/mould, in which it is to be held during printing (8).

The central server transmits the image file to the processor of a printer in a factory for manufacturing eyeglass frames. The server is preferably located in the factory. An eyeglass frame of the selected style is identified and located in a support in the form of a jig/mould associated with the print apparatus which helps to ensure that the parts of the frame to be printed are positioned in a known position relative to the print head (9). The print apparatus is a colour ink jet printer.

The parts of the frame to be printed with the design are provided with a white paint layer as a pre-treatment, or the printer prints a layer of white ink onto the parts of the frame to ensure that the image produced is of true colour. The ink jet printer is then controlled to print the selected design on to the selected parts of the frame. This may involve movement of the print head or of the support in which the frame is located.

## Claims

1. A method for providing customized eyeglass frames, comprising:
a local user providing an indication of a design selected by the user for application to an eyeglass frame (1,2); and
receiving, at a central controller, the indication provided by the user (7);
the method further comprising:
applying said design to an eyeglass frame for supply to the user (9,10).

2. The method of claim 1, wherein the method is implemented over a distributed system such that the local user provides the indication of the selected design at a first location, and the indication is received by the central controller at a second, different location.

3. The method of claim 1 or 2, wherein the user provides the indication of the selected design via a local user terminal.

4. The method of any preceding claim, wherein the indication is provided to the central controller over a communications link, such as via the Internet.

5. The method of any preceding claim, wherein the central controller stores information relating to a plurality of designs which may be applied to eyeglass frames, the method further comprising:
presenting some or all of the plurality of designs to the local user (2).

6. The method of any preceding claim, wherein the local user provides the indication of the selected design by providing an image of a design, the method comprising:
the local user uploading an image of a design, the image being received by the central controller (1).

7. The method of any preceding claim, further comprising:
the local user specifying the size and/or position of the design to be applied to the eyeglass frame relative to the eyeglass frame.

8. The method of any preceding claim, wherein the design is applied to only a portion of the eyeglass frame.

9. The method of any preceding claim, further comprising;
providing the local user with an indication of the appearance of the selected design as applied to the eyeglass frame (5);
wherein the indication is a composite image comprising an image of the design superimposed on an image of the eyeglass frame.

10. A central controller, comprising:
means for receiving from a local user an indication of a design selected by the user for application to an eyeglass frame; and
means for providing information relating to said selected design to be used in controlling a process of applying designs to eyeglass frames such that said selected design is applied to an eyeglass frame for supply to the user.

11. A method of applying a design to an eyeglass frame, comprising:
receiving from a central controller information relating to a design to be applied to an eyeglass frame, wherein the design is a selected design indicated by a local user to the central controller; and
using said information in a process of applying a design to an eyeglass frame such that the selected design is applied to an eyeglass frame.

12. The method of claim 11, wherein the selected design is applied to the eyeglass frame by being printed onto the eyeglass frame or by being transferred onto the eyeglass frame from a mould onto which the design has been printed.

13. The method of claim 11 or 12, wherein the eyeglass frame is mounted to a support during the application of the selected design thereto, the design being registered to the eyeglass frame with reference to the support.

14. A method for providing customized eyeglass frames, comprising:
a user providing indications of: a design selected by the user for application to an eyeglass frame; an eyeglass style selected by the user to which the design is to be applied; and a desired position of the design relative to the eyeglass frame (1,2,3,4);
receiving the indications provided by the user; and
determining information to be used to control a process for applying the design to the eyeglass frame to result in the selected design being applied to an eyeglass frame of the selected style in the desired position (8);
wherein the eyeglass frame is to be mounted to a support during application of the design thereto (9), and the step of determining said information comprises:
identifying a support to be used in the design application process; and
deriving registration information for the design relative to the support which results in the application of the design in the desired position to an eyeglass frame of the selected style when mounted to the support in use.

15. A central controller, comprising;
means for receiving a local user indications of: a design selected by the user for application to an eyeglass frame; an eyeglass style selected by the user to which the design is to be applied; and a desired position of the design relative to the eyeglass frame; and
means for determining information to be used to control a process for applying a design to an eyeglass frame to result in the selected design being applied to an eyeglass frame of the selected style in the desired position;
wherein the eyeglass frame is to be mounted to a support during application of the design thereto, and said means for determining said information comprises:
means for identifying a support to be used in the design application process; and
means for deriving registration information for the design relative to the support which results in the application of the design in the desired position to an eyeglass frame of the selected style when mounted to the support in use.
